Europäisches Patentamt

European Patent Office

Office européen des brevets

(11) Numéro de publication: **0 318 376**
**A1**

## DEMANDE DE BREVET EUROPEEN

(21) Numéro de dépôt: 88402942.2

(22) Date de dépôt: 24.11.88

(51) Int. Cl.⁴: **B 60 R 22/32**
    F 16 B 2/10

(30) Priorité: 26.11.87 FR 8716437

(43) Date de publication de la demande:
    **31.05.89 Bulletin 89/22**

(84) Etats contractants désignés: **DE GB IT**

(71) Demandeur: **HERSON, Samy**
    **12/14, rue de Tourville**
    **F-78100 Saint Germain en Laye (FR)**

(72) Inventeur: **HERSON, Samy**
    **12/14, rue de Tourville**
    **F-78100 Saint Germain en Laye (FR)**

(74) Mandataire: **Sauvage, Renée**
    **Cabinet Sauvage 100 bis, avenue de Saint-Mandé**
    **F-75012 Paris (FR)**

(54) **Agrafe de sûreté et son application à la réalisation de ceintures de sécurité à double possibilité de déverrouillage.**

(57) Le brin abdominal de la ceinture de sécurité est constitué d'une rallonge (7a) et d'un brin abdominal proprement dit (7b). Les brins (7a et 7b) forment des boucles en vis-à-vis (10a, 10b, 13a, 13b, 13c) qui viennent s'intercaler les unes entre les autres et qui sont réunies par enfilage, dans la succession alternée, de l'élément allongé (16) d'une agrafe de sûreté renforcée et fermeture de ladite agrafe par sa tige (17).

FIG3

EP 0 318 376 A1

Bundesdruckerei Berlin

## Description

## Agrafe de sûreté et son application à la réalisation de ceintures de sécurité à double possibilité de déverrouillage

La présente invention a pour objet une agrafe de sûreté et son application à la réalisation de ceintures de sécurité à double possibilité de déverrouillage.

Les ceintures de sécurité classiques pour sièges de véhicules comportent un point d'ancrage permanent latéral supérieur, un point d'ancrage permanent latéral inférieur et un point d'ancrage temporaire latéral inférieur, les points d'ancrage permanents latéraux supérieur et inférieur étant réunis au point d'ancrage temporaire latéral inférieur respectivement par un brin thoracique de ceinture et par un brin abdominal, avec interposition entre ces brins d'une boucle de verrouillage-déverrouillage adaptée à coopérer avec le point d'ancrage temporaire.

Il peut arriver, notamment en cas d'accident, que la boucle de verrouillage-déverrouillage se bloque et qu'il soit impossible à l'automobiliste ou à son passager de se libérer de la ceinture, sinon en la coupant. Or, connaissant la résistance des sangles utilisées pour fabriquer les ceintures de sécurité, et en général l'absence, dans le véhicule, du moyens adaptés à couper une telle sangle, les inconvénients, si ce ne sont les dangers, d'un tel blocage de la boucle sont évidemment très grands.

Il a été proposé, par le Demandeur lui-même, de remédier à cet inconvénient en réalisant l'un et/ou l'autre des points d'ancrage dits "permanents" sous la forme d'un dispositif combinant une agrafe de sûreté et une boucle de retenue intégrée à l'organe d'ancrage correspondant.

Dans ce dispositif connu, l'agrafe de sûreté comprend un élément récepteur allongé et creux, dont une partie de paroi présente une boutonnière en trou de serrure mettant en communication l'intérieur de l'élément creux et le milieu extérieur et, d'autre part, une autre partie de paroi réunie d'une seule pièce à l'une des extrémités d'une tige dont l'autre extrémité est libre et munie d'une surépaisseur, ladite tige pouvant être élastiquement déformée pour permettre la fermeture de l'agrafe par introduction de la surépaisseur dans la partie large du trou de serrure, puis détente élastique de la tige.

De son côté, la boucle de retenue est constituée d'une plaque métallique dans laquelle est pratiquée une fenêtre dont la dimension est suffisante pour permettre le passage de deux brins de sangle mais insuffisante pour permettre à l'agrafe de sûreté de la traverser.

La réunion entre l'organe d'ancrage et la sangle de la ceinture de sécurité est réalisée en faisant passer une première fois la sangle dans la fenêtre de la boucle de retenue, en introduisant ladite sangle dans l'espace ménagé entre l'élément récepteur et la tige de l'agrafe de sûreté fermée, et en faisant passer une seconde fois la sangle dans la fenêtre de la boucle de retenue.

On comprend que tant que l'agrafe de sûreté est fermée, la sangle est retenue dans l'organe d'ancrage. Si l'on ouvre l'agrafe de sûreté en extrayant l'extrémité libre de la tige de la boutonnière de l'élément creux, la sangle est libérée et elle peut être immédiatement extraite de l'organe d'ancrage.

Le dispositif antérieur proposé est en soi satisfaisant, mais d'une part il nécessite des organes d'ancrage spécialement prévus à cet effet et, d'autre part, certains utilisateurs considèrent que les agrafes de sûreté, nécessairement disposées au niveau des organes d'ancrage, ne sont pas bien à portée de la main.

Il serait donc souhaitable d'apporter un dispositif de sécurité qui ne demande pas de modification sensible des systèmes existants et dans lequel l'agrafe de sûreté serait aussi accessible que la boucle de verrouillage/déverrouillage normale.

Pour ce faire, il convient de réaliser le brin abdominal de la ceinture en deux parties, à savoir une partie dite "rallonge" qui sera fixée à l'une de ses extrémités à l'organe d'ancrage latéral permanent inférieur, et dont l'autre extrémité sera réunie à la seconde partie du brin abdominal par l'intermédiaire d'une agrafe de sûreté.

L'agrafe de sûreté décrite plus haut ne convient pas à une telle application.

En effet, dans l'application antérieure, l'élément creux de l'agrafe de sûreté prend appui, sur toute sa longueur, sur la boucle de retenue métallique de sorte qu'elle ne subit pas de déformation sous l'effet des contraintes qui lui sont imposées par la ceinture de sécurité.

Dans la nouvelle application proposée, il n'est pas question d'utiliser une boucle de retenue et il a donc été nécessaire de concevoir une nouvelle agrafe de sûreté qui résiste sans déformation aux contraintes.

Ce but est atteint en ce sens que, selon l'invention, l'élément creux est moulé sur un tube métallique de renforcement qu'il emprisonne et l'un des chants de la boutonnière est chanfreiné pour accueillir la surépaisseur de la tige, laquelle surépaisseur a une configuration complémentaire à celle du chanfrein.

L'agrafe de sûreté est obtenue par moulage et, pour ce faire, la section transversale de l'élément creux va en se réduisant très légèrement d'une extrémité à l'autre et, du côté de son extrémité de plus faible section, l'élément creux présente une face d'extrémité de même section que celle de son extrémité opposée, la réunion entre cette face d'extrémité et le côté de plus faible section se faisant par l'intermédiaire d'une rampe.

Cette configuration de rampe est naturellement destinée à faciliter la mise en place et l'extraction de l'agrafe de sûreté.

L'agrafe de sûreté ainsi renforcée convient tout à fait à la réalisation d'une ceinture de sécurité à double possibilité de déverrouillage.

Plus précisément, selon l'invention, le brin abdominal est en deux parties réunies entre elles par l'intermédiaire de ladite agrafe renforcée, laquelle est interposée en un point du brin abdominal tel qu'elle est sensiblement symétrique à la boucle de déverrouillage/verrouillage par rapport à l'axe médian du siège.

Ainsi, l'agrafe de sûreté est aussi accessible à l'utilisateur que l'est la boucle de verrouillage/déverrouillage.

Dans une forme d'exécution pratique de l'invention, les deux parties du brin abdominal à réunir sont chacune repliées sur elle-mêmes pour former, l'une, un nombre impair de boucle(s), l'autre un nombre pair de boucles, et la réunion entre ces deux parties est réalisée en intercalant chacune des boucles de l'une des parties entre une paire de boucles appartenant à l'autre partie, en introduisant l'élément creux de l'agrafe dans l'enfilade de boucles ainsi obtenue et en renfermant l'agrafe de sûreté.

Dans une forme d'exécution possible, l'une des parties du brin abdominal forme une boucle unique et l'autre partie forme une paire de boucles, la boucle unique venant s'intercaler entre les deux boucles de ladite paire.

Dans une autre forme d'exécution possible, l'une des parties du brin abdominal forme deux boucles et l'autre partie forme trois boucles entre lesquelles viennent s'intercaler chacune des deux boucles précitées.

La séparation entre deux boucles adjacentes d'une même partie de brin peut être réalisée par coupure à chaud mais, de préférence, elle sera réalisée par une fente ménagée au tissage.

L'invention sera mieux comprise à la lecture de la description ci-après faite en référence aux dessin annexés dans lesquels :

- la figure 1 est une représentation générale d'un siège avant de véhicule automobile équipé d'une ceinture de sécurité selon l'invention,

- les figures 2 et 3 représentent respectivement, à l'état séparé et à l'état réuni, les deux parties de brin abdominal au niveau de la zone A de la figure 1, dans une première forme d'exécution,

- les figures 4 et 5 représentent respectivement, à l'état séparé et à l'état réuni, les deux parties de brin abdominal au niveau de la zone A de la figure 1, dans une deuxième forme d'exécution,

- la figure 6a représente, en élévation, l'agrafe de sûreté selon l'invention,

- la figure 6b est une vue en bout selon la flèche B de l'agrafe de la figure 6a,

- la figure 6c est une coupe selon la ligne C-C de la figure 6a, et

- la figure 6d est une coupe prise selon la ligne D-D de la figure 6a.

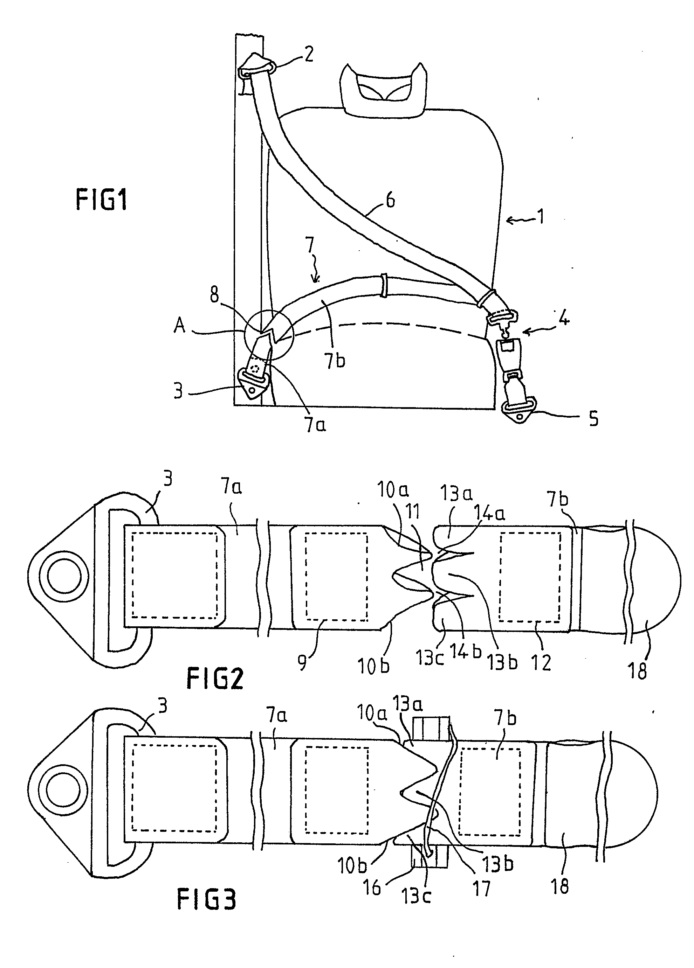

Si l'on se réfère à la figure 1, on voit un siège avant 1 de véhicule automobile équipé d'une ceinture de sécurité. Il est prévu, en partie latérale haute, un dispositif d'ancrage permanent 2 réalisé sous la forme d'un enrouleur classique. Sur le même côté par rapport au siège, mais en partie basse, il est prévu un dispositif d'ancrage permanent inférieur 3 et, également en partie basse mais de l'autre côté du siège, un dispositif d'ancrage temporaire réalisé sous la forme d'une boucle de verrouillage/déverrouillage 4 réunie à un dispositif d'ancrage 5.

La ceinture de sécurité est constituée par une sangle qui va, en définissant un brin thoracique 6, de l'enrouleur 2 à la boucle de verrouillage/déverrouillage 4, et en définissant un brin abdominal 7 qui va de cette même boucle à l'organe d'ancrage 3. Le brin abdominal 7 est en fait constitué de deux parties, à savoir un brin abdominal proprement dit 7b et une rallonge 7a. Les brins 7a et 7b sont réunis entre eux par un dispositif de sécurité schématisé en 8 et qui va être décrit ci-après.

Si l'on se réfère à la figure 2, on retrouve les brins 7a et 7b et l'organe d'ancrage 3. Comme on le voit, le brin 7a est cousu selon 9 et replié sur lui-même en définissant deux boucles 10a, 10b qui sont séparées l'une de l'autre par une fente 11. De son côté, le brin 7b est cousu replié sur lui-même par une couture 12 et il définit trois boucles 13a, 13b, 13c séparées les unes des autres par deux fentes 14a, 14b. Les fentes ont été ménagées au tissage pour donner une plus grande solidité au brin. Les fentes 11, 14a et 14b sont rectilignes et leurs bords sont repliés vers l'intérieur pour donner une forme effilée aux boucles 10a, 10b, 13a, 13b, 13c.

Comme il sera décrit en détail plus loin, en référence aux figures 6a-6d, l'agrafe de sûreté désignée dans son ensemble par 15, comporte un élément allongé creux 16 et une tige 17.

La réunion entre les brins 7a et 7b est réalisée en enfilant l'élément creux 16 successivement dans les boucles 13c, 10b, 13b, 10a et 13a et en refermant l'agrafe de sûreté. On comprend que le fait de replier les bords des fentes 11, 14a et 14b, d'une part, facilite l'introduction des boucles 10a et 10b respectivement entre les boucles 13a, 13b et 13b, 13c, et d'autre part, augmente la résistance du dispositif.

La figure 3 montre le dispositif une fois assemblé. La référence 18 aux figures 2 et 3 désigne une languette qui a pour fonction, une fois enfilée sous la tige 17 à la manière d'un passant de ceinture, d'améliorer l'esthétique du produit tout en signalant immédiatement son existence à d'éventuels secouristes.

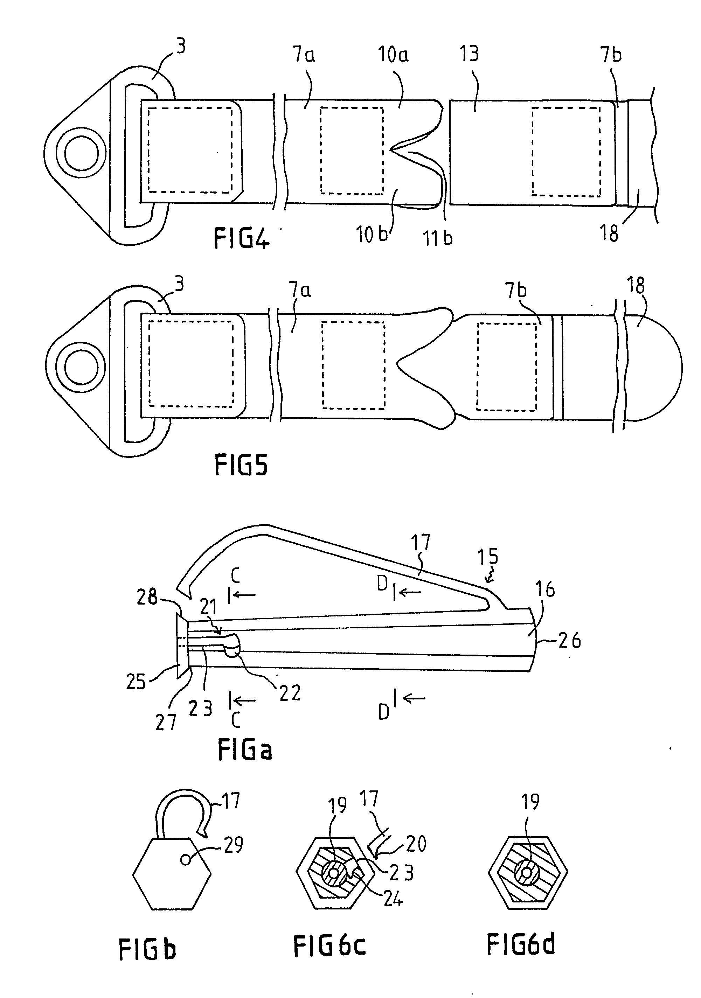

Si l'on en vient aux figures 4 et 5, les mêmes références désignent les mêmes structures et on comprendra que la seule différence est que, dans ce cas, le brin 7a ne définit qu'une seule boucle 13 qui va venir s'introduire dans l'espace ménagé par la fente 11.

La structure de l'agrafe de sûreté selon l'invention ressort plus clairement des figures 6a à 6d.

Comme on le voit d'après ces figures, l'agrafe 15 est composée d'un élément allongé et creux 16 dans lequel est noyé et emprisonné un tube métallique 19 de renforcement. Une tige 17 vient de moulage avec l'élément 16 et son extrémité libre comporte une surépaisseur 20. Une boutonnière 21 est ménagée dans la paroi de l'élément 16, laquelle boutonnière comporte une rampe d'accès 22 et une fente 23, dont l'un des bords est chanfreiné comme on le voit en 24 à la figure 6c. Comme il ressort également de cette figure 6c, la surépaisseur 20 de la tige 17 a un profil qui correspond à celui de chanfrein. L'agrafe 15 est obtenue par moulage et, à des fins de facilité de fabrication, l'élément creux 16 a une section transversale qui va en décroissant légèrement d'une extrémité à l'autre. A la figure 6a, cette réduction de section a été exagérée pour améliorer la clarté du dessin. L'élément creux 16 présente, à son extrémité de plus petite section, une face d'extrémité 25 de même section que l'autre extrémité 26 dudit élément. La jonction entre l'extrémité de plus petite section 27 et la face d'extrémité 25 est assurée par une rampe 28 facilitant l'introduction et l'extraction de l'agrafe de sûreté. Là encore, les dénivellations ont été accentuées sur les dessins à des fins de clarté. La fente 23 et son chanfrein 24 sont ménagés au moulage en prévoyant un mandrin rétractable qui laisse un orifice 29 dans la face d'extrémité 25 (figure 6b). De son côté, la rampe 22 d'accès à la boutonnière est réalisée en prévoyant un relief approprié dans le moule.

On comprend que l'agrafe de sûreté est fermée en contraignant la tige 17 à une déformation élastique et en engageant la surépaisseur 20 de la tige 17 dans la boutonnière 23 à partir de la rampe 22 et que, lorsque l'on relâche ladite tige 17 sa détente pousse son extrémité garnie de la surépaisseur 20 vers la face d'extrémité 25.

Il suffit de déformer élastiquement la tige 17 en direction de la rampe 22 pour pouvoir ouvrir l'agrafe de sûreté et désolidariser les brins 7a et 7b. Ainsi, si la boucle de verrouillage/déverrouillage 4 se trouve bloquée, la ceinture peut être ouverte au niveau indiqué par la zone A à la figure 1, zone A qui est aussi accessible à l'usager que la boucle de verrouillage/déverrouillage 4.

## Revendications

1- Agrafe de sûreté, notamment pour ceintures de sécurité, du type comprenant un élément récepteur (16) allongé et creux, dont une partie de paroi présente, une boutonnière (21) en trou de serrure mettant en communication l'intérieur de l'élément creux (16) et la milieu extérieur et, d'autre part, une autre partie de paroi réunie d'une seule pièce à l'une des extrémités d'une tige (17) dont l'autre extrémité est libre et munie d'une surépaisseur (20), ladite tige (17) pouvant être élastiquement déformée pour permettre la fermeture de l'agrafe par introduction de la surépaisseur (20) dans la partie large (22) du trou de serrure et détente élastique de la tige (17), caractérisée en ce que l'élément creux (16) est moulé sur un tube métallique (19) de renforcement, et en ce que l'un des chants de la boutonnière (23) est chanfreiné (24) pour accueillir la surépaisseur (20) de la tige, laquelle surépaisseur (20) a une configuration complémentaire à celle du chanfrein (24).

2- Agrafe selon la revendication 1, caractérisée en ce que la section transversale de l'élément creux (16) va en se réduisant très légèrement d'une extrémité à l'autre, et en ce que, du côté de son extrémité de plus faible section (27), l'élément creux (16) présente une face d'extrémité (25) de même section que celle de son extrémité opposée (26), la réunion entre cette face d'extrémité (25) et le côté de plus faible section (27) se faisant par l'intermédiaire d'une rampe (28).

3- Application de l'agrafe selon la revendication 1 ou 2 à la réalisation d'une ceinture de sécurité pour siège de véhicule comportant un point d'ancrage permanent latéral supérieur (2), un point d'ancrage permanent latéral inférieur (3) et un point d'ancrage temporaire latéral inférieur (5), lesdits points d'ancrage permanents latéraux supérieur (2) et inférieur (3) étant réunis au point d'ancrage temporaire latéral inférieur (5) respectivement par un brin thoracique (6) de ceinture et par un brin abdominal (7), avec interposition, entre ces brins, d'une boucle de verrouillage/déverrouillage (4), caractérisée en ce que le brin abdominal (7) est en deux parties (7a, 7b), réunies entre elles par l'intermédiaire de ladite agrafe (15), laquelle est interposée en un point du brin abdominal (7) tel qu'elle est sensiblement symétrique à la boucle de verrouillage/déverrouillage (4) par rapport à l'axe médian du siège (1).

4- Application selon la revendication 3, caractérisée en ce que les deux parties (7a, 7b) du brin abdominal (7) à réunir sont chacunes repliées sur elles-mêmes pour former, l'une, un nombre impair de boucle(s) (13; 13a, 13b, 13c), l'autre, un nombre pair de boucles (10a, 10b), et en ce que la réunion entre ces deux parties (7a, 7b) est réalisée en intercalant chacune des boucles de l'une des parties entre une paire de boucles appartenant à l'autre partie, et en introduisant l'élément creux (16) de l'agrafe (15) dans l'enfilade de boucles (13a, 10a, 13b, 10b, 13c ; 10a, 13, 10b) ainsi obtenue et en refermant l'agrafe de sûreté (15).

5- Application selon la revendication 3, caractérisée en ce que l'une des parties du brin abdominal forme une boucle unique (13), et en ce que l'autre partie forme une paire de boucles (10a, 10b), la boucle unique (13) venant s'intercaler entre les deux boucles (10a, 10b) de ladite paire.

6- Application selon la revendication 3, caractérisée en ce que l'une des parties du brin abdominal forme deux boucles (10a, 10b), et en ce que l'autre partie forme trois boucles (13a, 13b, 13c) entre lesquelles viennent s'intercaler chacune des deux boucles précitées (10a, 10b).

7- Application selon l'une quelconque des revendications 4 à 6, caractérisée en ce que la séparation entre deux boucles adjacentes (10a, 10b ; 13a, 13b ; 13b, 13c) d'une même partie de brin est réalisée par une fente (11, 14a, 14b) ménagée au tissage.

FIG1

FIG2

FIG3

FIG4

FIG5

FIGa

FIGb

FIG6c

FIG6d

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 363 337  (R.E. EYDAN)<br>* figures; revendication *<br>--- | 1,3,4 | B 60 R   22/32<br>F 16 B    2/10 |
| A | FR-A-2 468 382  (G. DURMEYER)<br>* figure; revendication *<br>--- | 3,4 | |
| A | DE-A-3 435 677  (L. FRANZ)<br>--- | | |
| A | DE-U-8 432 988  (A. HERBST)<br>----- | | |

DOMAINES TECHNIQUES
RECHERCHES (Int. Cl.4)

B 60 R   22/00
F 16 B    2/00

Le présent rapport a été établi pour toutes les revendications

| Lieu de la recherche | Date d'achèvement de la recherche | Examinateur |
|---|---|---|
| BERLIN | 06-01-1989 | SCHAEFFLER C.A.A. |